# EUROPEAN PATENT SPECIFICATION

(11) **EP 0 418 066 B1**
(45) Date of publication and mention of the grant of the patent: **25.01.1995**
(21) Application number: 90309998.4
(22) Date of filing: 12.09.1990
(51) Int. Cl.: B05D 7/02, B05D 1/04, C08L 101/00

(54) **Method of producing a resin moulding having an electrostatic coating**
Verfahren zum elektrostatischen Beschichten eines Kunststofformteils
Procédé pour le revêtement d'une résine moulée par voie électrostatique

(30) Priority: 13.09.1989 JP 238270/89
(43) Date of publication of application: 20.03.1991
(73) Proprietor: DAI-ICHI KOGYO SEIYAKU CO., LTD., Shimogyo-ku Kyoto (JP); KANTO JIDOSHA KOGYO KABUSHIKI KAISHA, Yokosuka-shi, Kanagawa (JP)
(72) Inventor: Fujiwara, Hidekazu, No. 1006 Hi-Terrace, Yokohama-shi, Kanagawa (JP); Mori, Shigeo, Kyoto (JP); Motogami, Kenji, Takatsuki-shi, Osaka (JP)
(74) Representative: Seaborn, George Stephen

(56) References cited:
- EP-A- 353 932
- EP-A- 363 103
- EP-A- 418 067
- EP-A- 421 612
- GB-A- 2 118 763
- GB-A- 2 172 819
- US-A- 4 359 411

## Description

### Background of the Invention

This invention relates to a method of producing a resin moulding having an electrostatic coating.

Conventional methods for electrostatically coating a resin moulding include a method described in Japanese Laid-Open Patent Publication No. 66,538 of 1975 in which a conductive paint containing conductive metal powder is applied on the surface of a resin moulding to form a conductive primer layer and then electrostatic coating is carried out, and a method in which an inorganic conductive substance such as carbon black, carbon fibre or conductive mica is mixed with the resin and the mixture is moulded and then the moulding is electrostatically coated.

However, these conventional methods for electrostatically coating a resin moulding have the following disadvantages which cause difficulty in practical use of the methods.

In the case of which a conductive primer layer is formed on the surface of a resin moulding as described in Japanese Laid-Open Patent Publication No. 66,538 of 1975, the adhesion between the surface of the reason moulding and the conductive primer is poor. To improve the adhesion it is necessary to apply a plurality of layers of various types of conductive primer. This causes not only difficulties in conductivity and productivity but also problems in application loss and cost due to the use of various types of conductive primer.

In the case of which an electrostatic coating is applied to a resin moulding comprising a conductive substance such as carbon black, carbon fibre or conductive mica, the conductive substance is inevitably mixed with the resin in a large amount. The conductive substance tends to cause deterioration of the resin moulding and by colouring the resin moulding discolours the surface of the electrostatic coating.

An object of the present invention is to provide a method of producing a resin moulding having an electrostatic coating, the coating being excellent in applicability and adhesion and there being no substantial deterioration in physical properties and colour of the resin.

### Summary of the Invention

In accordance with the present invention there is provided a method of producing a resin moulding which has an electrostatic coating, characterized in that it comprises mixing with a resin a complex between a polyether and an electrolyte salt soluble in said polyether, moulding the mixture, treating the resulting moulding with plasma, and then spray-coating an electrically charged paint on the surface of the treated moulding,
said polyether having a molecular weight of 1,000 to 100,000 and being selected from homopolymers of an alkylene oxide having no fewer than 4 carbon atoms per molecule and block or random alkylene oxide copolymers containing not less than 10 weight % of alkylene oxide units having no fewer than 4 carbon atoms, and
said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

### Detailed Description of the Invention

The resin used in the method according to the invention may be any resin having a high surface resistance, such as a polyolefin resin, e.g. a resin selected from polyethylene and polypropylene, ABS resin, acrylic resin, polyamide resin, polyvinyl chloride resin, polycarbonate resin, polyacetal resin and phenolic resins.

Further, the polyether of the complex used in the method according to the invention may be any polyether selected from alkylene oxide polymers and copolymers as referred to above. Polymers of an alkylene oxide having no fewer than 4 carbon atoms per molecule and block or random alkylene oxide copolymers containing not less than 10 weight % of alkylene oxide units having no fewer than 4 carbon atoms are used.

In general, it is preferred that the polyether is prepared by carrying out a polymerization reaction by using one of the following active hydrogen compounds as the starting material: monoalcohols, e.g. methanol and ethanol; dialcohols, e.g. ethylene glycol, propylene glycol and 1,4-butanediol; polyhydric alcohols, e.g. glycerol, trimethylol propane, sorbitol, sucrose and polyglycerol; amine compounds, e.g. monoethanolamine, ethylenediamine, diethylenetriamine, 2-ethylhexylamine and hexamethylene diamine; and phenolic active hydrogen-containing compounds, e.g. bisphenol-A and hydroquinone. It is especially preferred to use alcohols as the starting material.

The alkylene oxides having no fewer than 4 carbon atoms per molecule are preferably selected from α-olefine oxides having 4 to 9 carbon atoms, e.g., 1,2-eoxybutane, 1,2-epoxypentane, 1,2-epoxyhexane, 1,2-epoxyheptane, 1,2-epoxyoctane, 1,2-epoxynonane and the like; α-olefine oxides having no fewer than 10 carbon atoms per molecule; styrene oxide and the like. It is especially preferred to use α-olefine oxides having 4 to 20 carbon atoms per molecule.

The polyethers may be either homopolymers or block or random copolymers. The sequence of the above alkylene oxides in the polyethers is not particularly limited. However, preferably the block or random copolymers are of at least one alkylene oxide having no fewer than 4 carbon atoms per molecule and ethylene oxide and/or propylene oxide. Further, block or random copolymers of at least one alkylene oxide having no fewer than 6 carbon atoms per molecule and ethylene oxide and/or propylene oxide are most preferably used. It is necessary that the block or random copolymers contain not less than 10 weight %, more preferably not less than 50 weight %, of alkylene oxide units having no fewer than 4 carbon atoms. As mentioned above the alkylene oxide units may be all of the same formula. The end of the polymer may be terminated with an alkyl group such as a methyl group or an ethyl group.

The molecular weight of the polyether is 1,000 to 100,000.

The soluble electrolyte salt used to produce a complex with the polyether is selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate; organic sulfonates and organic phosphates. The added amount of the electrolyte salt is preferably 0.5 to 10 weight % based on the polyether.

The used amount of the complex of the polyether and the soluble electrolyte salt is preferably 1 to 10 weight %, more preferably 1 to 5 weight % based on the resin. Though an addition of not less than 10 weight % of it improves electric conductivity, it causes disadvantageous deterioration of physical properties and surface bleeding due to the poor compatibility of the salt with the resin.

For forming the complex between the polyether and the soluble electrolyte salt, a method is preferred in which firstly the soluble electrolyte salt is dissolved in a single or mixed solvent highly compatible with the polyether, such as water, methanol, methyl ethyl ketone, tetrahydrofuran, acetone or methylene chloride, secondly the solution is mixed uniformly with the polyether to give a solution of the complex and thirdly the solvent is removed to give the complex.

For mixing the complex between the polyether and the soluble electrolyte salt with the resin, any commonly used method can be used such as biaxial extrusion or hot rolling. For moulding the mixture any commonly used method can be used such as injection moulding, extrusion moulding, calendering, compression moulding and SMC process.

The plasma treatment is preferably carried out using a low pressure oxidative gas such as oxygen or gaseous mixture of nitrogen or argon with oxygen excited with high frequency discharge or microwave discharge to form active gas which is contacted with the surface of the moulding to be treated. Preferably the pressure is usually 0.1 to 5 Torr, more preferably 0.2 to 1.0 Torr, the temperature is 40 to 100°C and the treating period is 10 seconds to 10 minutes.

It is preferred that the treating gas contains 18 to 90 volume % of oxygen.

The electrostatic coating may be applied by any conventional method such as electric centrifugal method, air or airless spraying method or the like. The applied voltage may be about - 60KV to about -120KV. Further, the paint may be any conventional paint such as urethane, acrylic, alkyd or melamine type paint.

In the resin moulding of present invention, the cation of the soluble electrolyte salt of the complex can move through the ether oxygen in the polyether and hence ionic conductivity is formed in the resin to lower its resistance.

The cation of the soluble electrolyte salt of the complex and the decrease in surface resistance due to the plasma treatment exert a synergistic effect whereby a resistance highly suitable for electrostatic coating is provided and an electrostatic coating of improved applicability is obtained.

### Preferred Embodiments of the Invention

The following examples serve to illustrate the invention in more detail although the invention is not limited to the examples.

### Example 1

45 g of 1,4-butanediol as a starting material was put in a reactor and 550 g of 1,2-epoxybutane was gradually introduced in it by a usual method in the presence of potassium hydroxide as a catalyst. Then the product was purified by desalting to obtain 550 g of a polyether having a molecular weight of 1,100 (calculated from hydroxyl number) and containing 0.23 ppm of K⁺.

A solution of 25 g lithium perchlorate in 100 g methanol was added to 500 g of the polyether with stirring to obtain a homogeneous solution and then methanol was removed in vacuo to obtain a complex.

30 g of the complex and 1 kg of polypropylene resin were mixed in a biaxial extruder at 180°C for 10 min. and moulded with a hot press method at the same temperature under a pressure of 50 kg/cm² for 2 min. and surface of the resultant moulding (230 mm × 230 mm × 3 mm) was treated with plasma in a gas containing 89 volume % of oxygen and 11 volume % of nitrogen at a gas flow rate of 6.75 ℓ/min under a pressure of 0.2 mm Hg at a temperature of 40°C and at an outlet power of 1,200 W for 1 min. to prepare a test piece.

Then the test piece was grounded (earthed) and an urethane paint was applied on it by using a painting machine (µ µ BEL 30 ⌀ made by Ransburg-Gema AG) under an electrostatic voltage of -60KV with a recipro stroke of 400 mm, a spray distance of 300 mm and a conveyor velocity of 2.2 m/min.

### Example 2

32 g of ethylene glycol was used as a starting material and 667 g of an ethylene oxide/propylene oxide mixture (molar ratio 4:1 ) was reacted with it in the presence of potassium hydroxide as a catalyst. Then a mixture of 496 g of α-olefine oxide having 12 carbon atoms and 1,334 g of propylene oxide was further reacted with the product and thus obtained product was purified by desalting to obtain 5,140 g of a polyether having a molecular weight of 4,970 (calculated from hydroxyl number) and containing 0.16 ppm of K⁺.

A solution of 25 g of lithium perchlorate in 100 g of methanol was added to 500 g of the polyether with stirring to obtain a uniform solution and then methanol in the solution was removed in vacuo to obtain a complex.

70 g of the complex and 1 kg of polypropylene resin were mixed in a biaxial extruder at 180°C for 10 min. and moulded with a hot press method at the same temperature under a pressure of 50 kg/cm² for 2 min. (230 mm × 230 mm × 3 mm) and surface of the resultant moulding was treated with plasma in a gas containing 89 volume % of oxygen and 11 volume % of nitrogen at a gas flow rate of 6.75 ℓ/min under a pressure of 0.2 mm Hg at a temperature of 40°C and at an outlet power of 1,200 W for 1 min. to prepare a test piece.

Then the test piece was grounded (earthed) and an urethane paint was applied on it by using a painting machine (µ µ BEL 30 ⌀ made by Ransburg-Gema AG) under an electrostatic voltage of -60KV with a recipro stroke of 400 mm, a spray distance of 300 mm and a conveyor velocity of 2.2 m/min.

### Example 3

32 g of ethylene glycol was put in a reactor as a starting material and 1680 g of 1,2-epoxybutane was gradually introduced in it by a usual method in the presence of potassium hydroxide as a catalyst. The reaction product was purified by desalting to obtain 1,690 g of a polyether having a molecular weight of 3,100 (calculated from hydroxyl number) and containing 0.17 ppm of K⁺.

A solution of 25 g of potassium thiocyanate in 200 g of acetone was added to 500 g of the polyether with stirring to prepare a homogeneous solution and then ace tone was removed in vacuo to obtain a complex.

50 g of the complex and 1 kg of polypropylene resin were mixed im a biaxial extruder at 180°C for 10 min. and moulded with a hot press method at the same temperature under a pressure of 50 kg/cm² for 2 min. (230 mm × 230 mm × 3 mm) and surface of the resultant moulding was treated with plasma in a gas containing 89 volume % of oxygen and 11 volume % of nitrogen at a gas flow rate of 6.75 ℓ/min under a pressure of 0.2 mm Hg at a temperature of 40°C and at an outlet power of 1,200 W for 1 min. to prepare a test piece.

Then the test piece was grounded (earthed) and an urethane paint was applied on it by using a painting machine (µ µ BEL 30 ⌀ made by Ransburg-Gema AG) under an electrostatic voltage of -60KV with a recipro stroke of 400 mm, a spray distance of 300 mm and a conveyor velocity of 2.2 m/min.

### Example 4

45 g of sorbitol was put in a reactor as a starting material and 2.500 g of ethylene oxide and 5.500 g of α-olefine oxide having 6 carbon atoms were successively introduced in it by a usual method in the presence of potassium hyroxide as a catalyst. The reaction product was purified by desalting to obtain 7.400 g of a polyether having a molecular weight of 29,700 (calculated from hydroxyl number) and containing 0.35 ppm of K⁺.

A solution of 25 g of potassium perchlorate in 100 g of methanol was added to 500 g of the polyether with stirring to obtain a homogeneous solution and then methanol was removed in vacuo to obtain a complex.

50 g of the complex and 1 kg of polypropylene resin were mixed in a biaxial extruder at 180°C for 10 min. and the product was moulded with a hot press method at the same temperature under a pressure of 50 kg/cm² for 2 min. (230 mm × 230 mm × 3 mm) and surface of the resultant moulding was treated with plasma in a gas containing 89 volume % of oxygen and 11 volume % of nitrogen at a gas flow rate of 6.75 ℓ/min under a pressure of 0.2 mm Hg at a temperature of 40°C and at an outlet power of 1200 W for 1 min. to prepare a test piece.

Then the test piece was grounded and an urethane paint was applied on it by using a painting machine (µ µ BEL 30 ⌀ made by Ransburg-Gema AG) under an electrostatic voltage of -60KV with a recipro stroke of 400 mm, a spray distance of 300 mm and a conveyor velocity of 2.2 m/min.

### Comparative Example 1

1 kg of polypropylene resin was kneaded in a biaxial extruder at at 180°C for 10 min. and the product was molded with a hot press method at the same temperature under a pressure of 50 kg/cm² for 2 min. (230 mm × 230 mm × 3 mm) and surface of the resultant moulding was treated with plasma in a gas containing 89 volume % of oxygen and 11 volume % of nitrogen at a gas flow rate of 6.75 ℓ/min under a pressure of 0.2 mm Hg at a temperature of 40°C and at an outlet power of 1200 W for 1 min. to prepare a test piece.

Then the test piece was grounded (earthed) and an urethane paint was applied on it by using a painting machine (µ µ BEL 30 ⌀ made by Ransburg-Gema AG) under an electrostatic voltage of -60KV with a recipro stroke of 400 mm, a spray distance of 300 mm and a conveyor velocity of 2.2 m/min.

The thickness of the urethane film made by electrostatic coating in Examples 1 to 4 and Comparative Example 1 and the coating efficiency were as follows.

| | Film thickness (mm) | Coating efficiency |
|---|---|---|
| Example 1 | 36 | 77 % |
| Example 2 | 39 | 78 % |
| Example 3 | 40 | 80 % |
| Example 4 | 34 | 72 % |
| Comparative Example 1 | 7 | 25 % |

No substantial difference was observed in the other physical properties and colour between the products prepared in Examples 1 to 4 and Comparative Example 1.

As described above, according to this inventions, an electrostatic coating of high quality can be applied on the resin having a high surface resistance, which cause electrostatic coating of the resin to be difficult, with no deterioration in physical properties.

## Claims

1. A method of producing a resin moulding which has an electrostatic coating, characterized in that it comprises mixing with a resin a complex between a polyether and an electrolyte salt soluble in said polyether, moulding the mixture, treating the resulting moulding with plasma, and then spray-coating an electrically charged paint on the surface of the treated moulding,
said polyether having a molecular weight of 1,000 to 100,000 and being selected from homopolymers of an alkylene oxide having no fewer than 4 carbon atoms per molecule and block or random alkylene oxide copolymers containing not less than 10 weight % of alkylene oxide units having no fewer than 4 carbon atoms, and
said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

2. A method as defined in Claim 1, wherein said electrolyte salt is used in an amount of 0.5 to 10 weight % based on said polyether.

3. A method as defined in Claim 1 or 2, wherein said complex is used in an amount of 1 to 10 weight % based on said resin.

## Patentansprüche

1. Verfahren zur Herstellung eines Harzformteils, das eine elektrostatische Beschichtung besitzt, dadurch gekennzeichnet, daß das Verfahren folgendes umfaßt: Mischen eines Komplexes zwischen einem Polyether und einem in genanntem Polyether löslichen Elektrolytsalz mit einem Harz, Formen des Gemischs, Behandeln des sich ergebenden Formteils mit Plasma und dann Sprühbeschichten der Oberfläche des behandelten Formteils mit einer elektrisch geladenen Anstrichfarbe,
wobei genannter Polyether ein Molekulargewicht von 1000 bis 100 000 hat und aus Homopolymeren eines Alkylenoxids mit nicht weniger als 4 Kohlenstoffatomen pro Molekül und Block- oder statistisch aufgebauten Alkylenoxid-Copolymeren ausgewählt wird, die nicht weniger als 10 Gew.-% Alkylenoxideinheiten mit nicht weniger als 4 Kohlenstoffatomen enthalten, und
genanntes Elektrolytsalz aus Lithiumchlorid, Lithiumbromid, Lithiumiodid, Lithiumnitrat, Lithiumperchlorat, Lithiumthiocyanat, Natriumbromid, Natriumiodid, Kaliumthiocyanat, Kaliumiodid, Lithiumsulfonat, organischen Sulfonaten und organischen Phosphaten ausgewählt wird.

2. Verfahren nach Anspruch 1, worin genanntes Elktrolytsalz in einer Menge von 0,5 bis 10 Gew.-% bezogen auf genannten Polyether verwendet wird.

3. Verfahren nach Anspruch 1 oder 2, worin genannter Komplex in einer Menge von 1 bis 10 Gew.-% bezogen auf genanntes Harz verwendet wird.

## Revendications

1. Procédé de production d'un article moulé résineux qui est muni d'un revêtement électrostatique, caractérisé en ce qu'il comprend le fait de mélanger avec une résine un complexe entre un polyéther et un sel électrolytique soluble dans ledit polyéther, de mouler le mélange, de traiter au plasma l'article moulé résultant et ensuite d'enduire par pulvérisation avec une peinture électriquement chargée la surface de l'article moulé traité,
ledit polyéther possédant un poids moléculaire de 1.000 à 100.000 et étant choisi parmi des homopolymères d'un oxyde d'alkylène ne possédant pas moins de 4 atomes de carbone par molécule, et des copolymères séquencés ou statistiques d'oxydes d'alkylènes ne contenant pas moins de 10% en poids de motifs d'oxydes d'alkylènes ne possédant pas moins de 4 atomes de carbone, et
ledit sel électrolytique étant choisi parmi le chlorure de lithium, le bromure de lithium, l'iodure de lithium, le nitrate de lithium, le perchlorate de lithium, le thiocyanate de lithium, le bromure de sodium, l'iodure de sodium, le thiocyanate de potassium, l'iodure de potassium, le sulfonate de lithium, des sulfonates organiques et des phosphates organiques.

2. Procédé tel que défini à la revendication 1, dans lequel on utilise ledit sel électrolytique en une quantité de 0,5 à 10% en poids, basée sur ledit polyéther.

3. Procédé tel que défini à la revendication 1 ou 2, dans lequel on utilise ledit complexe en une quantité de 1 à 10% en poids, basée sur ladite résine.
